# EUROPEAN PATENT APPLICATION

(11) **EP 4 749 445 A1**
(43) Date of publication of application: **27.05.2026**
(21) Application number: 24909763.5
(22) Date of filing: 02.08.2024
(51) Int. Cl.: G06F 9/451

(54) **PWM FREQUENCY ADJUSTMENT METHOD, ELECTRONIC DEVICE, AND READABLE STORAGE MEDIUM**

(30) Priority: 29.12.2023 CN 202311872440
(71) Applicant: Honor Device Co., Ltd., Shenzhen, Guangdong 518040 (CN)
(72) Inventor: HU, Dashuai, Shenzhen, Guangdong 518040 (CN); ZHOU, Jian, Shenzhen, Guangdong 518040 (CN); ZHANG, Kailiang, Shenzhen, Guangdong 518040 (CN); CUI, Chuang, Shenzhen, Guangdong 518040 (CN)
(74) Representative: Goddar, Heinz J.
(86) International application number: PCT/CN2024/109661
(87) International publication number: WO 2025/138809

(57) **Abstract**

This application discloses a PWM frequency adjustment method, an electron device, and a readable storage medium, and belongs to the field of terminal technologies. The method includes: receiving an interface switching operation, where the interface switching operation is an operation of triggering the electronic device to switch between a first interface and a second interface; and in response to the interface switching operation, the electronic device may present an interface transition effect corresponding to the interface switching operation, and adjust a PWM frequency in a process of presenting the interface transition effect, where the interface transition effect includes at least one of a transition animation, a color gamut change effect, an interface transparency change effect, and a brightness change effect. In this application, screen flicker on a display screen that is caused by adjustment on the PWM frequency is masked through the interface transition effect, thereby improving a display effect of the screen.

## Description

This application claims priority to Chinese Patent Application No. 202311872440.1, filed with the China National Intellectual Property Administration on December 29, 2023 and entitled "PWM FREQUENCY ADJUSTMENT METHOD, ELECTRONIC DEVICE, AND READABLE STORAGE MEDIUM", which is incorporated herein by reference in its entirety.

### TECHNICAL FIELD

This application relates to the field of terminal technologies, and specifically, to a PWM frequency adjustment method, an electronic device, and a readable storage medium.

### BACKGROUND

With the development of terminal technologies, a user uses an electronic device more frequently, and pulse width modulation (Pulse width modulation, PWM) dimming is generally used for a display screen of the electronic device. In this case, if a PWM frequency is lower than a specific threshold, after the user watches the display screen of the electronic device for a long time, the user is prone to eye fatigue. Therefore, an eye protection function of the screen may be generally implemented by adjusting the PWM frequency.

Currently, to implement the eye protection function of the screen, generally, high-frequency PWM dimming is used for an increasing quantity of electronic devices, that is, dimming may be performed on the electronic device by using a high PWM frequency.

However, because the PWM frequency is always high, power consumption of the electronic device increases. In addition, if the PWM frequency is adjusted during use of the electronic device, when the PWM frequency changes greatly, screen flicker may occur, resulting in a poor screen display effect.

### SUMMARY

This application provides a PWM frequency adjustment method, an electronic device, and a readable storage medium, to resolve a problem of a poor screen display effect that is caused by screen flicker that occurs on a display screen. The technical solutions are as follows:

According to a first aspect, a PWM frequency adjustment method is provided, applied to an electronic device having a display screen, where the method includes:

receiving an interface switching operation, where the interface switching operation is an operation of triggering the electronic device to switch between a first interface and a second interface; presenting, in response to the interface switching operation, an interface transition effect corresponding to the interface switching operation; and adjusting a PWM frequency of the display screen in a process of presenting the interface transition effect.

In this way, because the PWM frequency may be adjusted as display content changes, an eye protection function of the display screen is ensured, and power consumption of the electronic device is reduced. In addition, an occasion for adjusting the PWM frequency is in the process of presenting the interface transition effect. In this way, different effects of the interface transition effect in the presentation process may mask screen flicker on the display screen that is caused by adjustment on the PWM frequency, thereby improving a display effect of the screen. A user hardly perceives occurrence of the screen flicker, thereby improving user viscosity.

In an example of this application, the interface transition effect includes at least one of a transition animation, a color gamut change effect, an interface transparency change effect, and a brightness change effect.

In this way, different interface transition effects are set, so that richness of interface transition is improved, and reliability of masking the screen flicker in an interface transition process is improved.

In an example of this application, brightness of the first interface is greater than brightness of the second interface.

Based on this, that the electronic device adjusts the PWM frequency of the display screen in the process of presenting the interface transition effect includes:

increasing, when the interface switching operation is a first operation, the PWM frequency of the display screen in the process of presenting the interface transition effect, where the first operation is an operation of triggering the electronic device to switch from the second interface to the first interface; and reducing, when the interface switching operation is a second operation, the PWM frequency of the display screen in the process of presenting the interface transition effect, where the second operation is an operation of triggering the electronic device to switch from the first interface to the second interface.

In this way, in a process of switching an interface displayed on the display screen from the first interface to the second interface, the electronic device may present a first transition effect, and in a process of presenting the first transition effect, the electronic device may reduce the PWM frequency. In other words, because the PWM frequency is reduced when the second interface with reduced brightness is displayed, the power consumption of the electronic device is reduced. In a process of switching the interface displayed on the display screen from the second interface to the first interface, the electronic device may present a second transition effect, and in a process of presenting the second transition effect, the PWM frequency may be increased. In this way, an objective of dynamically adjusting the PWM frequency based on different display content is achieved. In addition, because the PWM frequency can be increased, the eye protection function of the electronic device is also implemented. In addition, the occasion for adjusting the PWM frequency is in the process of presenting the interface transition effect. In this way, different effects of the interface transition effect in the presentation process may mask the screen flicker on the display screen that is caused by the adjustment on the PWM frequency, thereby improving the display effect of the screen.

In an example of this application, the second interface is an AOD interface. When the interface switching operation is the second operation, before reducing the PWM frequency of the display screen in the process of presenting the interface transition effect, the electronic device may further determine a type of an AOD mode in the electronic device. The type of the AOD mode includes a global display mode and a partial display mode.

Based on this, when the interface switching operation is the second operation, an operation that the electronic device reduces the PWM frequency of the display screen in the process of presenting the interface transition effect includes:
reducing, when the interface switching operation is the second operation and the type of the AOD mode is the global display mode, the PWM frequency of the display screen in the process of presenting the interface transition effect.

In some embodiments, information related to settings of the electronic device may be stored in a set database. Therefore, the electronic device may query the set database, to determine the type of the AOD mode in the set database.

In this way, the type of the AOD mode is determined, so that the PWM frequency is reduced more targetedly, and reliability of adjusting the PWM frequency is improved.

In an example of this application, the interface switching operation is a second operation, the electronic device includes an interface switching module and a PWM adjustment module, and the interface transition effect includes the transition animation.

Based on this, an operation that the electronic device presents, in response to the interface switching operation, the interface transition effect corresponding to the interface switching operation includes:
The interface switching module presents, in response to the second operation, a first transition animation for switching from the first interface to the second interface.

When the interface switching operation is the second operation of triggering the electronic device to switch from the first interface to the second interface, an operation that the electronic device reduces the PWM frequency of the display screen in the process of presenting the interface transition effect includes:
The interface switching module sends a frequency reducing instruction to the PWM adjustment module in a process of presenting the first transition animation; and the PWM adjustment module, reduces the PWM frequency in response to the frequency reducing instruction.

In some embodiments, the interface switching operation is the first operation, the electronic device includes the interface switching module and the PWM adjustment module, and the interface transition effect includes the transition animation.

Based on this, the operation that the electronic device presents, in response to the interface switching operation, the interface transition effect corresponding to the interface switching operation includes:
The interface switching module presents, in response to the first operation, the second transition effect for switching from the second interface to the first interface, where the second transition effect includes a second transition animation.

When the interface switching operation is the first operation, an operation that the electronic device increases the PWM frequency of the display screen in the process of presenting the interface transition effect includes:
The interface switching module sends a frequency increasing instruction to the PWM adjustment module in the process of presenting the second transition effect; and the PWM adjustment module increases the PWM frequency in response to the frequency increasing instruction.

In this way, the interface switching module may send different frequency adjustment instructions to the PWM adjustment module based on different interface switching operations, thereby improving reliability and accuracy of adjusting the PWM frequency.

In an example of this application, the interface switching operation is the second operation, and the interface transition effect further includes the interface transparency change effect. Based on this, the operation that the electronic device presents, in response to the interface switching operation, the interface transition effect corresponding to the interface switching operation includes:
obtaining, in response to the interface switching operation, ambient light data of an environment in which the electronic device is located; determining display transparency of an interface background in the second interface based on the ambient light data; setting transparency of the interface background in the second interface to the display transparency; and presenting the interface transition effect based on the set interface background.

In this way, the display transparency is determined through current ambient light data, and the transparency of the interface background in the second interface is set to the display transparency. This not only ensures aesthetics of the second interface, but also enables information in the second interface to be quickly obtained by the user and attention of the user is not attracted by the interface background.

In an example of this application, the interface transition effect further includes the color gamut change effect.

The operation that the electronic device presents, in response to the interface switching operation, the interface transition effect corresponding to the interface switching operation includes:
improving a color gamut of the display screen in response to the interface switching operation if the interface switching operation is the first operation; and reducing the color gamut of the display screen in response to the interface switching operation if the interface switching operation is the second operation.

In an example of this application, the electronic device includes the interface switching module and a color gamut adjustment module.

Based on this, if the interface switching operation is the first operation, an operation that the electronic device improves the color gamut of the display screen includes:

When receiving a color gamut increasing instruction sent by the interface switching module, the color gamut adjustment module improves the color gamut of the display screen, where the color gamut increasing instruction is sent by the interface switching module when the interface switching module receives the first operation.

If the interface switching operation is the second operation, an operation that the electronic device reduces the color gamut of the display screen includes:
When receiving a color gamut reducing instruction sent by the interface switching module, the color gamut adjustment module reduces the color gamut of the display screen, where the color gamut reducing instruction is sent by the interface switching module when the interface switching module receives the second operation.

In this way, different operations are performed on the color gamut of the display screen in different scenarios, so that color display on the display screen can be more adaptive to a displayed picture, and the display effect of the display screen can be improved.

In an example of this application, the interface transition effect further includes the brightness change effect.

The operation that the electronic device presents, in response to the interface switching operation, the interface transition effect corresponding to the interface switching operation includes:
improving brightness of the display screen in response to the interface switching operation if the interface switching operation is the first operation; and reducing the brightness of the display screen in response to the interface switching operation if the interface switching operation is the second operation.

In an example of this application, the electronic device includes at least two gamma curves, and each of the at least two gamma curves corresponds to one PWM frequency.

In this way, different gamma curves are set, so that adjustment on the PWM frequency is more reliable and smoother.

In an example of this application, the second interface is the AOD interface. When the interface switching operation is the second operation, after reducing the PWM frequency of the display screen in the process of presenting the interface transition effect, the electronic device may further display the AOD interface and reduce a screen refresh rate of the display screen. For example, when the electronic device displays the AOD interface, that is, when the electronic device is in a static display state, the screen refresh rate of the display screen may be reduced to 1 Hz.

In this way, the screen refresh rate of the display screen is reduced, so that the power consumption of the electronic device is reduced.

In an example of this application, when the interface switching operation is the first operation, an operation that the electronic device increases the PWM frequency of the display screen in the process of presenting the interface transition effect includes:
increasing, when the interface switching operation is the first operation, the PWM frequency from a first frequency to a second frequency in the process of presenting the interface transition effect, where the first frequency is less than the second frequency.

When the interface switching operation is the second operation, the operation that the electronic device reduces the PWM frequency of the display screen in the process of presenting the interface transition effect includes:
reducing, when the interface switching operation is the second operation, the PWM frequency from the second frequency to the first frequency in the process of presenting the interface transition effect.

In this way, the first frequency and the second frequency are set, so that the electronic device has data support when adjusting the PWM frequency, and the reliability and the accuracy of adjusting the PWM frequency are improved.

According to a second aspect, an electronic device is provided. A structure of the electronic device includes a processor and a memory. The memory is configured to store a program that supports the electronic device in performing the PWM frequency adjustment method provided in the first aspect, and store data used to implement the PWM frequency adjustment method according to the first aspect. The processor is configured to execute the program stored in the memory. The electronic device may further include a communication bus, and the communication bus is configured to establish a connection between the processor and the memory.

According to a third aspect, a computer-readable storage medium is provided, where the computer-readable storage medium stores instructions, and when the instructions are run on a computer, the computer is enabled to perform the PWM frequency adjustment method according to the first aspect.

According to a fourth aspect, a computer program product including instructions is provided, and when the instructions are run on a computer, the computer is enabled to perform the PWM frequency adjustment method according to the first aspect.

Technical effects achieved in the second aspect, the third aspect, and the fourth aspect are similar to technical effects achieved by corresponding technical means in the first aspect. Details are not described herein again.

### BRIEF DESCRIPTION OF DRAWINGS

FIG. 1 is a schematic diagram of an application scenario according to an embodiment of this application;
FIG. 2 is a schematic diagram of another application scenario according to an embodiment of this application;
FIG. 3 is a schematic diagram of another application scenario according to an embodiment of this application;
FIG. 4 is a block diagram of a software system of an electronic device according to an embodiment of this application;
FIG. 5 is a flowchart of a PWM frequency adjustment method according to an embodiment of this application;
FIG. 6 is a schematic diagram of pulses corresponding to different PWM frequencies according to an embodiment of this application;
FIG. 7 is a schematic diagram of a change of brightness according to an embodiment of this application;
FIG. 8 is a flowchart of another PWM frequency adjustment method according to an embodiment of this application;
FIG. 9 is a schematic diagram of a process of reducing a PWM frequency according to an embodiment of this application;
FIG. 10 is a schematic diagram of a process of increasing a PWM frequency according to an embodiment of this application; and
FIG. 11 is a schematic diagram of a structure of an electronic device according to an embodiment of this application.

### DESCRIPTION OF EMBODIMENTS

To make the objectives, technical solutions, and advantages of this application clearer, the following further describes implementations of this application in detail with reference to the accompanying drawings.

It should be understood that "a plurality of" mentioned in this application means two or more. In descriptions of this application, unless otherwise specified, "/" means "or". For example, A/B may represent A or B. In this specification, "and/or" describes only an association relationship for describing associated objects and indicates that three relationships may exist. For example, A and/or B may represent the following three cases: A exists alone, both A and B exist, and B exists alone. In addition, to clearly describe the technical solutions of this application, words such as "first" and "second" are used to distinguish between same items or similar items with basically the same functions and effects. A person skilled in the art may understand that the words such as "first" and "second" do not limit a number or an execution sequence, and the words such as "first" and "second" do not indicate a definite difference.

Reference to "an embodiment", "some embodiments", or the like described in the specification of this application means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

With the development of terminal technologies, a user uses an electronic device more frequently, and PWM dimming may be generally used for a display screen of the electronic device. When the PWM dimming is used, a brightness value felt by human eyes may be adjusted by adjusting a duty cycle of PWM. However, when the duty cycle of the PWM is adjusted, a PWM frequency does not change. If the PWM frequency is lower than a specific threshold, after the user watches the display screen of the electronic device for a long time, the user is prone to eye fatigue. Therefore, to implement an eye protection function, high-frequency PWM dimming is used for an increasing quantity of electronic devices, that is, dimming may be performed on the electronic device by using a high PWM frequency. However, because the PWM frequency is always high, power consumption of the electronic device increases. In addition, if the PWM frequency is adjusted during use of the electronic device, when the PWM frequency changes greatly, screen flicker may occur, resulting in a poor screen display effect, and the user may perceive the screen flicker, resulting in reduced user viscosity.

To implement an eye protection function of a screen and reduce the power consumption of the electronic device, embodiments of this application provide a PWM frequency adjustment method. In this method, the electronic device may dynamically adjust the PWM frequency based on display content. For example, when the user needs to stare at the display screen for a long time, for example, when the user reads an e-book or watches a video by using the electronic device, the electronic device may increase the PWM frequency, to achieve an eye protection effect. When the user does not need to stare at the display screen for a long time, for example, when an AOD (Always On Display) interface is displayed, the electronic device may display clock information and battery power information, and does not display other information, and the user can quickly obtain needed information by simply glancing at the display screen. In this case, high-frequency PWM does not need to be used for dimming, and the electronic device can reduce the PWM frequency, to reduce the power consumption of the electronic device.

In addition, in a process of adjusting the PWM frequency, to improve the problem of the poor display effect that is caused by the screen flicker on the display screen in the process of adjusting the PWM, the electronic device may dynamically adjust the PWM frequency in a process of presenting an interface transition effect when interface switching occurs. In other words, when receiving an interface switching operation, the electronic device presents the interface transition effect corresponding to the interface switching operation. In the process of presenting the interface transition effect, the electronic device may adjust the PWM frequency. Because the PWM frequency may be adjusted as the display content changes, an eye protection function of the display screen is ensured, and the power consumption of the electronic device is reduced. In addition, an occasion for adjusting the PWM frequency is in the process of presenting the interface transition effect. In this way, different effects of the interface transition effect in the presentation process may mask the screen flicker on the display screen that is caused by the adjustment on the PWM frequency, thereby improving the display effect of the screen. The user hardly perceives occurrence of the screen flicker, thereby improving user viscosity.

For ease of understanding, before the method provided in the embodiments of this application is described in detail, application scenarios related in the embodiments of this application are described below.

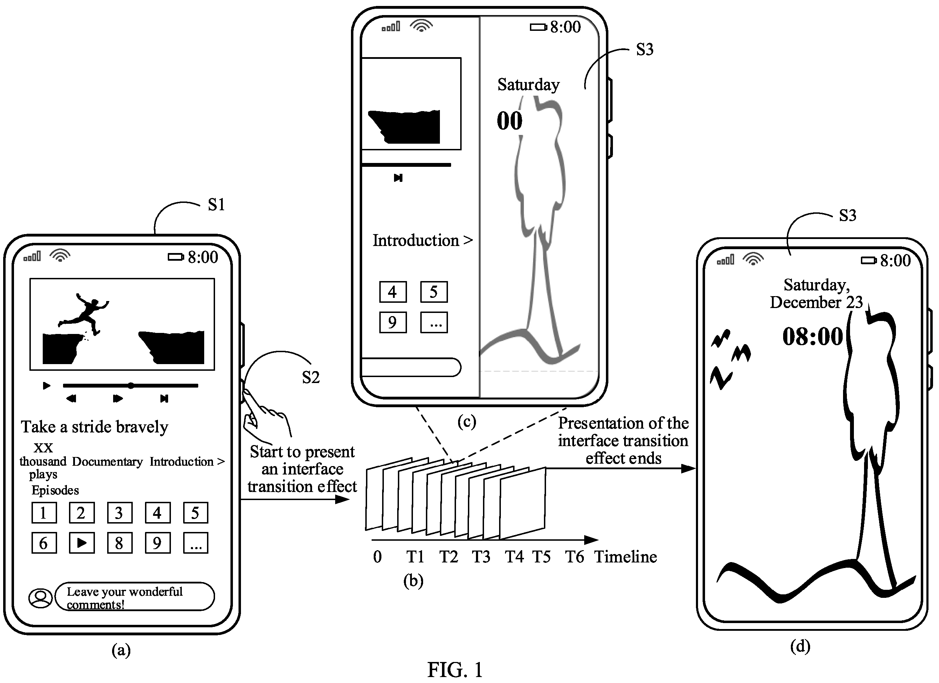

FIG. 1 is a schematic diagram of an application scenario according to an embodiment of this application. In an application scenario, after finishing using a mobile phone, the user may trigger a power button to exit a currently displayed interface and enter a screen-off state. Alternatively, after finishing using the mobile phone, the user does not use the mobile phone anymore, and when standby duration reaches automatic screen-off duration, the mobile phone may automatically exit the currently displayed interface, and enter the screen-off state. If the mobile phone is set with an AOD mode, after the mobile phone enters the screen-off state, an AOD interface may be displayed. For example, when the mobile phone displays a social application interface S1 of a video application as shown in (a) in FIG. 1, if the user presses a power button S2, referring to (b) in FIG. 1, the mobile phone may present an interface transition effect, that is, present a transition animation for switching from the social application interface S1 to an AOD interface S3. In a process of presenting the transition animation, the mobile phone may reduce a PWM frequency, for example, reduce the PWM frequency from 3840 Hz to 1440 Hz. A frame of image in the transition animation may be as shown in (c) in FIG. 1. When presentation of the transition animation ends, the mobile phone may display the AOD interface S3 as shown in (d) in FIG. 1.

It should be noted that, a frame of image in the interface transition effect in this embodiment of this application is merely an example. The electronic device may present the interface transition effect in a transition manner shown in FIG. 1, or in another manner, for example, by using another preset animation effect. The preset animation effect may be a fade-in effect, and the like. This is not specifically limited in this embodiment of this application.

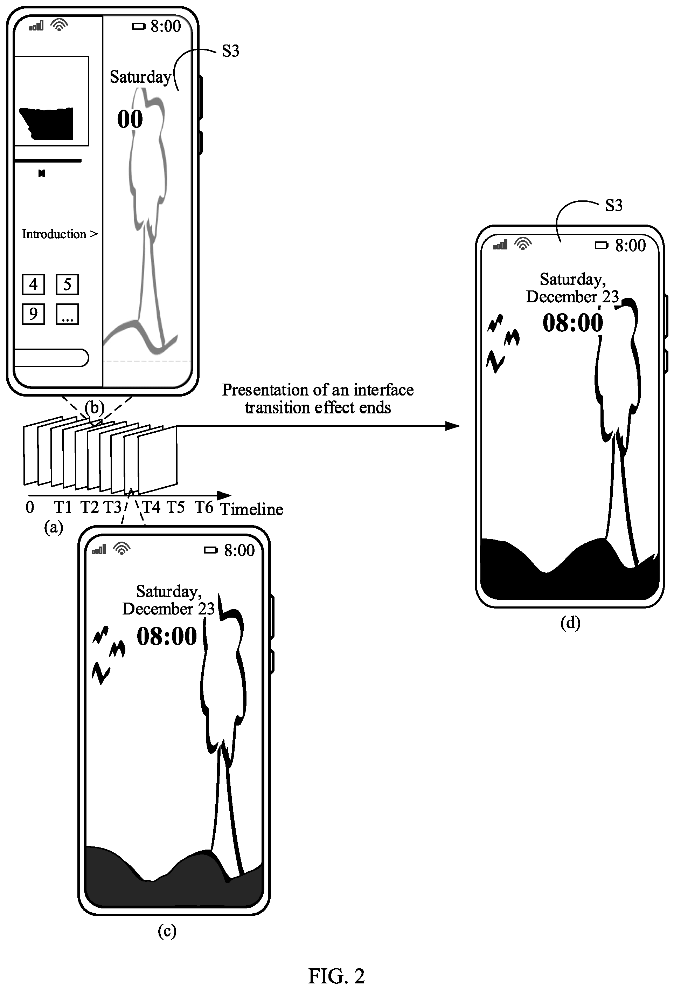

FIG. 2 is a schematic diagram of another application scenario according to an embodiment of this application. In the another application scenario, referring to (a) in FIG. 2, in a process in which a mobile phone presents an interface transition effect of switching from a social application interface S1 to an AOD interface S3, the interface transition effect may include not only a transition animation for switching from the social application interface S1 to the AOD interface S3, but also a color gamut change effect in the AOD interface S3. A frame of image A in the interface transition effect may be as shown in (b) in FIG. 2. Any frame of image B following the frame of image A may be as shown in (c) in FIG. 2. In (c) in FIG. 2, a color gamut of the AOD interface is reduced. When presentation of the transition animation ends, the mobile phone may display the AOD interface S3 as shown in (d) in FIG. 2.

It should be noted that, in the process in which the mobile phone presents the interface transition effect of switching from the social application interface S1 to the AOD interface S3, the interface transition effect may include not only the transition animation for switching from the social application interface S1 to the AOD interface S3 and the color gamut change effect in the AOD interface S3, but also an effect of reduced brightness of a display screen and a change effect of transparency of the AOD interface. Details are not described one by one in the accompanying drawings in the embodiments of this application.

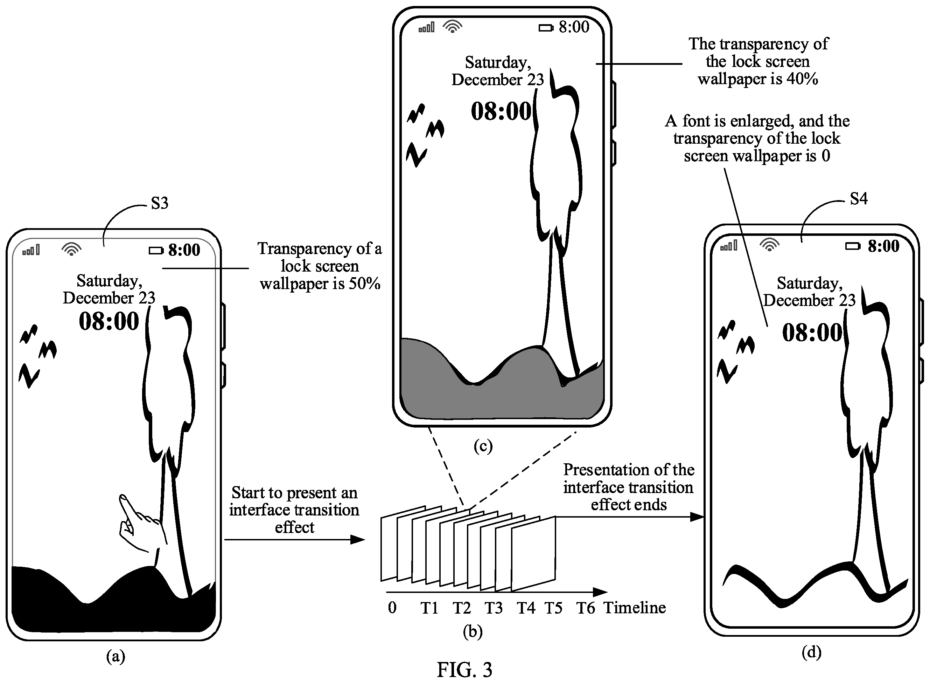

Referring to FIG. 3, when a mobile phone displays an AOD interface S3 as shown in (a) in FIG. 3, a user touches a screen of the mobile phone. Then, referring to (b) in FIG. 3, the mobile phone may present an interface transition effect, that is, present a transition animation for switching from the AOD interface S3 to a lock screen interface S4, a color gamut change effect of a display screen, and a change effect of display transparency of a lock screen wallpaper. In a process of presenting the interface transition effect, the mobile phone may increase a PWM frequency, for example, increase the PWM frequency from 1440 Hz to 3840 Hz. In addition, in the process of presenting the interface transition effect, a size of related information in the interface also changes, for example, clock information is amplified. A frame of image in the interface transition effect may be as shown in (c) in FIG. 3. In (c) in FIG. 3, transparency of the AOD interface changes from original 50% to 40%, and a color gamut of the display screen is increased. When presentation of the interface transition effect ends, the mobile phone may display the lock screen interface S4 as shown in (d) in FIG. 3. In the lock screen interface S4, transparency of the lock screen wallpaper is 0%. A font of clock information in the lock screen interface S4 is obviously larger than a font of clock information in the AOD interface.

It should be noted that, when the mobile phone displays the AOD interface S3, the user may further trigger, by pressing a power button S2, the mobile phone to display a transition effect of switching from the AOD interface S3 to the lock screen interface S4. This is not specifically limited in this embodiment of this application.

It should be noted that, the foregoing application scenarios shown in FIG. 1 to FIG. 3 are merely used as examples for description in the embodiments of this application, and do not constitute a limitation on the embodiments of this application.

A software system of an electronic device 100 is described below.

The software system of the electronic device 100 may use a layered architecture, an event-driven architecture, a microkernel architecture, a microservice architecture, or a cloud architecture. In this embodiment of this application, the software system of the electronic device 100 is described by using an Android (Android) system with the layered architecture as an example.

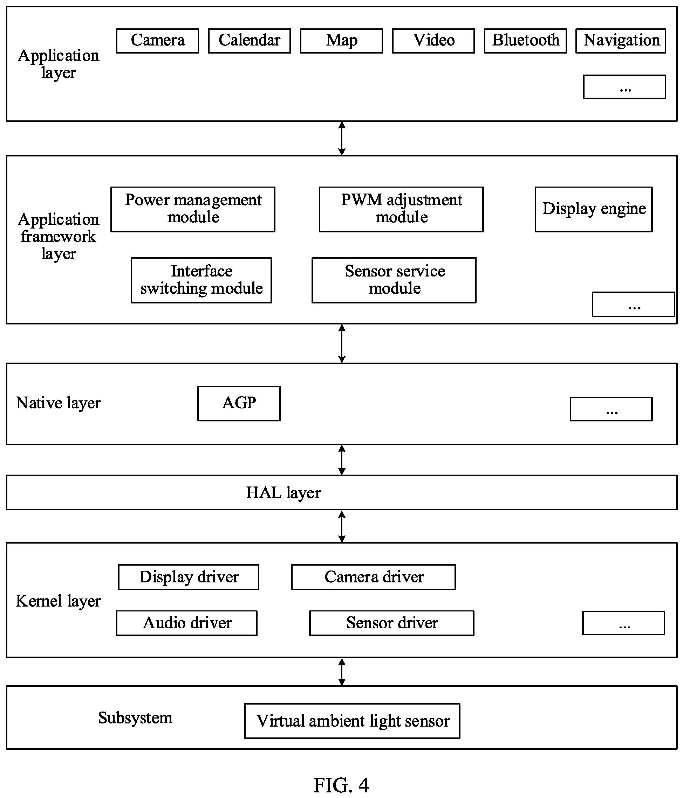

FIG. 4 is a block diagram of a software system of an electronic device 100 according to an embodiment of this application. Refer to FIG. 4, in a layered architecture, software is divided into several layers, and each layer has a clear role and task. The layers communicate with each other through software interfaces. In some embodiments, an Android system is divided into a plurality of layers: an application layer, an application framework layer, a native layer (native layer), a hardware abstraction layer (Hardware Abstraction Layer, HAL), and a kernel layer from top to bottom.

The application layer may include a series of application packages. As shown in FIG. 4, the application packages may include applications such as Camera, Calendar, Map, Video, Navigation, and Bluetooth.

The application framework layer provides an application programming interface (application programming interface, API) and a programming framework for an application at the application layer. The application framework layer includes some predefined functions. FIG. 3 shows an interface switching module, a power management module (PMS), a PWM adjustment module, a color gamut adjustment module, and a sensor service module (SensorService).

In an example, when a second interface is an AOD interface, the interface switching module may be a lock screen application (keyguard), the PWM adjustment module may be a display tube service module (DMS), and the color gamut adjustment module may be a display engine (DE service).

In some embodiments, when receiving a trigger operation performed by a user on a power button, the power management module is configured to send a power-off message or a power-on message to the interface switching module. The interface switching module may be configured to present an interface transition effect based on the received message sent by the power management module, and send related instructions to the PWM adjustment module and the color gamut adjustment module. The PWM adjustment module is configured to increase a PWM frequency or reduce the PWM frequency based on the instructions sent by the interface switching module. The color gamut adjustment module is configured to adjust a color gamut of a display screen based on the instructions sent by the interface switching module.

Next, an example in which the power management module sends the power-off message to the lock screen application, to enable the electronic device to be switched from a first interface to the AOD interface is used for description.

In some embodiments, when receiving the trigger operation performed by the user on the power button, the power management module sends the power-off message to the interface switching module. When receiving the power-off message sent by the power management module, the interface switching module pulls up an AOD function and sends an AOD display message to a display driver at the kernel layer, where the AOD display message is used to indicate the display driver to drive display based on a type of an AOD mode. After pulling up the AOD function, the interface switching module may register a callback notification of display transparency (where the display transparency may be represented by using a value α) of a lock screen wallpaper in the PWM adjustment module, and register a virtual ambient light sensor of a subsystem in the sensor service module. After completing registration of the virtual ambient light sensor, the sensor service module sends an ambient light obtaining message to the virtual ambient light sensor, where the ambient light obtaining message is used to indicate the virtual ambient light sensor to send detected ambient light data to the PWM adjustment module. When receiving the ambient light data, the PWM adjustment module determines the display transparency of the lock screen wallpaper based on the ambient light data, and sends the display transparency to the interface switching module. When receiving the display transparency, the interface switching module sets transparency of the lock screen wallpaper in the AOD interface to the display transparency, and presents an interface transition effect of switching from a first application interface to the AOD interface. When the AOD interface is displayed after presentation of the interface transition effect is completed, the transparency of the lock screen wallpaper in the AOD interface is the display transparency. In a process of presenting the interface transition effect, the interface switching module may further send a frequency reducing instruction to the PWM adjustment module, and send a color gamut reducing instruction to the color gamut adjustment module. When receiving the frequency reducing instruction, the PWM adjustment module reduces the PWM frequency. When receiving the color gamut reducing instruction sent by the interface switching module, the color gamut adjustment module reduces the color gamut of the display screen.

In some embodiments, when the second interface is the AOD interface, in the process in which the interface switching module presents the interface transition effect, the interface switching module may further terminate a screen-on animation effect and a magazine wallpaper function of the display screen, and lock the system.

In some embodiments, when the interface switching module ends the presentation of the interface transition effect and displays the AOD interface, the interface switching module may switch the display screen to an energy-saving and power-saving mode, even if the electronic device enters a DOZE state and hides a non-AOD icon (or a non-full-screen AOD icon) and a layer zooming animation effect.

The native layer may include an accelerated graphics port (Accelerate Graphical Port, AGP). The AGP is configured to switch the display screen to TE and reduce a screen refresh rate of the display screen when the PWM adjustment module completes PWM frequency adjustment and the interface switching module displays a still picture (the AOD interface).

The kernel layer is a layer between hardware and software. The kernel layer includes at least the display driver, a camera driver, an audio driver, and a sensor driver.

In an example, the display driver is configured to drive the display screen to perform displaying in the AOD mode when the AOD display message sent by the interface switching module is received.

In some embodiments, the electronic device further includes the subsystem, the subsystem may include the virtual ambient light sensor, and the virtual ambient light sensor may send the collected ambient light data to the interface switching module through the HAL layer.

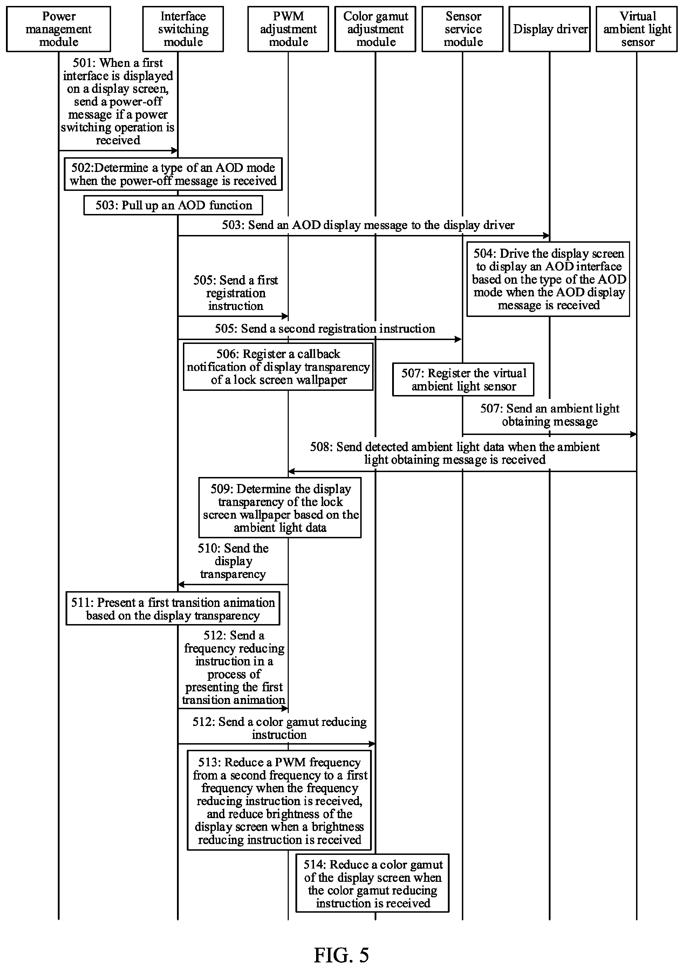

Based on the execution body provided in the foregoing embodiments, the following describes a PWM frequency adjustment method provided in the embodiments of this application. FIG. 5 is a schematic flowchart of a PWM frequency adjustment method according to an exemplary embodiment. By way of example but not limitation, in this embodiment of this application, an example in which a second interface is an AOD interface and a PWM frequency is reduced is used for description. The method may be performed by the foregoing electronic device. The electronic device may be implemented through interaction between a plurality of modules, and the method may include some or all of the following content:

Step 501: When a first interface is displayed on a display screen, a power management module sends a power-off message to an interface switching module if the power management module receives a power switching operation.

It should be noted that, the first interface is any interface displayed on the display screen by the electronic device when the display screen is in a screen-on state. For example, the first interface may be a desktop of the electronic device, an application interface of any application, or the like. Brightness of the first interface is greater than brightness of the AOD interface.

In some embodiments, the power switching operation may be triggered by a user, or may be automatically triggered by the electronic device. For example, when the first interface is displayed on the display screen, the user may press a power button. In this way, the power management module may receive the power switching operation. Alternatively, when the first interface is displayed on the display screen, and the user does not control the electronic device for a long time, if duration since a time point at which the user controls the electronic device for the last time reaches preset duration (where standby duration of the electronic device reaches the preset duration), the electronic device automatically triggers the power switching operation.

It should be noted that, the preset duration may be autonomously set by the user, or may be set by the electronic device by default. For example, first preset duration may be 20 seconds, 30 seconds, or the like.

Step 502: When receiving the power-off message, the interface switching module determines a type of an AOD mode.

When the user sets the AOD mode, the user may set the type of the AOD mode to a global display mode, or may set the type of the AOD mode to a partial display mode. When the type of the AOD mode is the partial display mode, a clock view is displayed in the AOD interface, and a lock screen wallpaper is not displayed (where a background in the AOD interface is black). In this case, the brightness of the AOD interface is dark originally, which reduces power consumption of the electronic device to some extent. Therefore, the PWM frequency may be adjusted or not adjusted. However, when the type of the AOD mode is the global display mode, the lock screen wallpaper is displayed with low brightness. In this case, to reduce the power consumption of the electronic device, the PWM frequency needs to be adjusted. In addition, when the PWM frequency is adjusted when the partial display mode is selected, the PWM frequency adjusted in the partial display mode may be the same as or different from the PWM frequency adjusted in the global display mode. Therefore, to accurately adjust the PWM frequency, when receiving the power-off message, the interface switching module may determine the type of the AOD mode.

Certainly, to enable a display driver to drive, in a corresponding manner, the display screen to display the AOD interface, the interface switching module may also determine the type of the AOD mode.

In some embodiments, information related to settings of the electronic device may be stored in a set database. Therefore, the interface switching module may query the set database, to determine the type of the AOD mode in the set database.

Step 503: The interface switching module pulls up an AOD function, and sends an AOD display message to the display driver.

It should be noted that, the AOD display message may carry the type of the AOD mode, to indicate the display driver to drive display based on the type of the AOD mode. In this embodiment of this application, an example in which the type of the AOD mode carried in the AOD display message is the global display mode is used for description.

In some embodiments, when the type of the AOD mode is the global display mode, the interface switching module may pull up a global AOD service to pull up the AOD function. If the type of the AOD mode is the partial display mode, the interface switching module may pull up an AOD application package (Android application package, APK).

Step 504: When receiving the AOD display message, the display driver drives the display screen to display the AOD interface based on the type of the AOD mode.

It should be noted that, when the type of the AOD mode carried in the AOD display message is the global display mode, the display driver may drive the display screen to display the AOD interface in the global display mode.

Step 505: The interface switching module sends a first registration instruction to a PWM adjustment module, and sends a second registration instruction to a sensor service module.

It should be noted that, the first registration instruction is used for registering a callback notification of display transparency (where the display transparency may be represented by using a value α) of the lock screen wallpaper in the PWM adjustment module, and the second registration instruction is used for registering a virtual ambient light sensor in the sensor service module.

To successfully call the value α and ambient light data, the interface switching module may indicate the PWM adjustment module to register the callback notification of the display transparency, and indicate the sensor service module to register the virtual ambient light sensor.

It should be noted that, a sequence of performing step 503 and step 505 by the interface switching module is not specifically limited in this embodiment of this application.

Step 506: The PWM adjustment module registers the callback notification of the display transparency of the lock screen wallpaper.

Step 507: The sensor service module registers the virtual ambient light sensor, and sends an ambient light obtaining message to the registered virtual ambient light sensor.

It should be noted that, the ambient light obtaining message is used to indicate the virtual ambient light sensor to send detected ambient light data to the PWM adjustment module.

Step 508: When receiving the ambient light obtaining message, the virtual ambient light sensor sends the detected ambient light data to the PWM adjustment module.

It should be noted that, the ambient light data includes a light intensity indicating an environment in which the electronic device is currently located.

Step 509: The PWM adjustment module determines the display transparency of the lock screen wallpaper based on the ambient light data.

In an example, the electronic device may store a correspondence between the display transparency and the ambient light data. In this way, the PWM adjustment module may determine the display transparency of the lock screen wallpaper from the stored correspondence based on the received ambient light data. The correspondence may be represented by using a two-dimensional curve, or may be represented by using a table. Alternatively, the electronic device may store a relationship function. The relationship function is a function used for indicating the correspondence between the ambient light data and the display transparency. When receiving the ambient light data, the PWM adjustment module may calculate the display transparency of the lock screen wallpaper based on the ambient light data by using the relationship function.

Step 510: The PWM adjustment module sends the display transparency to the interface switching module.

Because the PWM adjustment module registers a callback notification indicating that the interface switching module calls back the display transparency, the PWM adjustment module may send the display transparency to the interface switching module.

Step 511: The interface switching module presents a first transition animation based on the display transparency.

In some embodiments, the interface switching module sets transparency of the lock screen wallpaper in the AOD interface to the display transparency, and then presents the first transition animation. In other words, when an image frame carrying the lock screen wallpaper appears in the first transition animation, transparency of the lock screen wallpaper in the image frame is the display transparency. Alternatively, in a process of presenting the first transition animation, the transparency of the lock screen wallpaper in the AOD interface is set to the display transparency. In this case, based on different occasions for setting the display transparency, a scenario in which the transparency of the lock screen wallpaper changes may occur or may not occur in the first transition animation.

In an example, the first transition animation includes an exit animation for the first interface and a display animation for the AOD interface. If in the process of presenting the first transition animation, the interface switching module completes setting of the transparency of the lock screen wallpaper before presenting the display animation for the AOD interface, in an image frame carrying the lock screen wallpaper in the display animation for the AOD interface, transparency of all the lock screen wallpapers is the display transparency. If in the process of presenting the first transition animation, the interface switching module sets the transparency of the lock screen wallpaper in a process of presenting the display animation for the AOD interface, the display animation for the AOD interface includes a scenario in which the transparency of the lock screen wallpaper changes.

In some embodiments, the interface switching module may set the transparency of the lock screen wallpaper and present the first transition animation through a sleep function. The sleep function may be startGoingToSleep.

Step 512: In the process of presenting the first transition animation, the interface switching module sends a frequency reducing instruction and a brightness adjustment instruction to the PWM adjustment module, and sends a color gamut reducing instruction to a color gamut adjustment module.

To reduce the power consumption of the electronic device, and to prevent the user from perceiving screen flicker that occurs on the display screen in a process of adjusting the PWM frequency, in the process of presenting the first transition animation, the interface switching module may send the frequency reducing instruction and the brightness adjustment instruction to the PWM adjustment module, to indicate the PWM adjustment module to reduce the PWM frequency and reduce brightness of the display screen in the process in which the interface switching module presents the first transition animation. In addition, to implement the AOD function, the interface switching module may further send the color gamut reducing instruction to the color gamut adjustment module.

Step 513: The PWM adjustment module reduces the PWM frequency from a second frequency to a first frequency when receiving the frequency reducing instruction, and reduces the brightness of the display screen when receiving a brightness reducing instruction.

It should be noted that, the second frequency is greater than the first frequency, the second frequency is a PWM dimming frequency when the display screen is in the screen-on state, and the first frequency is a PWM dimming frequency when the display screen is in the AOD mode. For example, the second frequency may be 3840 Hz, and the first frequency may be 1440 Hz. The first frequency and the second frequency are not specifically limited in this embodiment of this application.

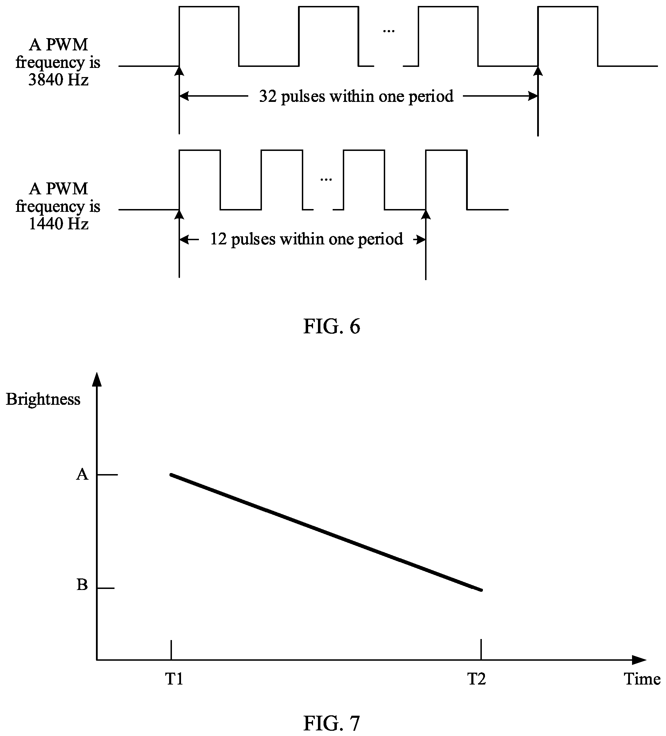

In some embodiments, adjusting the PWM frequency refers to adding PWM pulses at a same duty cycle. For example, for the adjustment process, refer to a schematic diagram shown in FIG. 6. When a PWM duty cycle remains unchanged, and the PWM frequency is 3840 Hz, a quantity of PWM pulses is 32 (a quantity within one period). When the PWM frequency is 1440 Hz, a quantity of PWM pulses is 12 (a quantity within one period).

In some embodiments, to implement switching of the PWM frequency, the electronic device may include at least two gamma curves, and each of the at least two gamma curves corresponds to one PWM frequency.

It should be noted that, a larger quantity of gamma curves included in the electronic device indicates a smoother process in which the PWM adjustment module adjusts the PWM frequency. For example, a gamma curve corresponding to another frequency is included between a gamma curve corresponding to the first frequency and a gamma curve corresponding to the second frequency. In this way, the PWM adjustment module may sequentially reduce the PWM frequency based on a pulse corresponding to each gamma curve.

In some embodiments, when receiving the brightness reducing instruction, the PWM adjustment module may reduce the brightness of the display screen in a manner of adjusting the PWM duty cycle, or certainly in another manner. This is not specifically limited in this embodiment of this application.

To reflect a change of brightness, an embodiment of this application provides a schematic diagram of adjusting the brightness of the display screen. Referring to FIG. 7, in FIG. 7, brightness A corresponding to a moment T1 is brightness of the display screen before the brightness is adjusted, and brightness B corresponding to a moment T2 is brightness of the display screen after the brightness is adjusted.

In some embodiments, after reducing the PWM frequency from the second frequency to the first frequency, the PWM adjustment module may send a dimming complete message to an AGP.

Step 514: When receiving the color gamut reducing instruction, the color gamut adjustment module reduces a color gamut of the display screen.

It should be noted that, a sequence of performing step 513 and step 514 is not specifically limited in this embodiment of this application.

In some embodiments, in the process of presenting the first transition animation, the interface switching module may not only indicate the PWM adjustment module to reduce the PWM frequency and the brightness of the display screen, but also indicate the color gamut adjustment module to reduce the color gamut of the display screen. The interface switching module may further terminate a screen-on animation effect and a magazine wallpaper of the display screen, and lock a system. Then, the display screen is switched from an ON () state to a DOZE state, and a non-full-screen AOD icon and a layer zooming animation effect are hidden.

It should be noted that, the interface switching module may terminate the screen-on animation effect and the magazine wallpaper of the display screen by using a screen-off function, and the screen-off function may be screenTurnedOff. The interface switching module may lock the system by using a finish function, and the finish function may be finishedGoingToSleep. The interface switching module may switch the display screen from the ON state to the DOZE state by using a dreamingStarted function, to hide the non-full-screen AOD icon and the layer zooming animation effect.

In some embodiments, the interface switching module may send a display complete message to the AGP after completing presentation of a first transition effect (including the foregoing first transition animation, a brightness reducing effect of the display screen, a transparency change effect and a color gamut reducing effect of the lock screen wallpaper in the AOD interface) and displaying of the AOD interface. When receiving the dimming complete message and the display complete message, the AGP may lower a screen refresh rate of the display screen.

For example, the AGP may reduce the screen refresh rate of the display screen to 1 Hz.

In this embodiment of this application, in a process of switching an interface displayed on the display screen from the first interface to the AOD interface, the electronic device may present the first transition effect, and in a process of presenting the first transition effect, the electronic device may reduce the PWM frequency. In other words, because the PWM frequency is reduced when the AOD interface is displayed, the power consumption of the electronic device is reduced. In addition, an occasion for adjusting the PWM frequency is in the process of presenting the interface transition effect. In this way, different effects of the interface transition effect in the presentation process may mask the screen flicker on the display screen that is caused by the adjustment on the PWM frequency, thereby improving a display effect of the screen.

The electronic device can not only reduce the PWM frequency, but also increase the PWM frequency. For example, when the second interface is the AOD interface, and the AOD interface is switched to the first interface, the electronic device can increase the PWM frequency. A process in which the electronic device increases the PWM frequency is similar to a process in which the electronic device decreases the PWM frequency. A process in which the plurality of modules in the electronic device interact with each other to increase the PWM frequency is not separately described in this embodiment of this application.

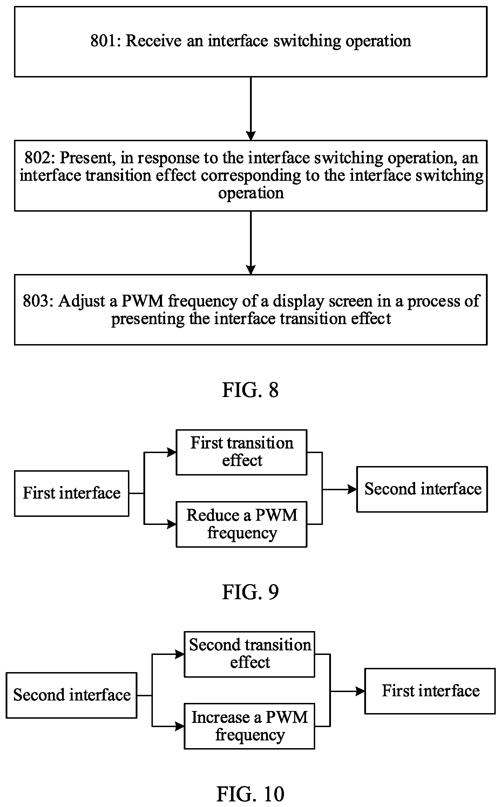

Based on the foregoing embodiments, a PWM frequency adjustment method implemented by the electronic device is described below by using the electronic device as an execution body. FIG. 8 is a schematic flowchart of another method for increasing a PWM frequency according to an exemplary embodiment. The method may include some or all of the following content:

Step 801: Receive an interface switching operation.

It should be noted that, the interface switching operation may be an operation of triggering an electronic device to switch between a first interface and a second interface. In other words, the interface switching operation is a first operation of triggering the electronic device to switch from the second interface to the first interface, or the interface switching operation is a second operation of triggering the electronic device to switch from the first interface to the second interface. In an example, brightness of the first interface may be the same as or different from brightness of the second interface. For example, when the brightness of the first interface is different from the brightness of the second interface, the brightness of the first interface is greater than the brightness of the second interface.

It can be learned from the foregoing descriptions that the first interface is any interface displayed on a display screen by the electronic device when the display screen is in a screen-on state. For example, the first interface may be a desktop of the electronic device, or an application interface of any application.

In an example, the first operation may be an operation that a user presses a power button, or may be another operation. For example, the first operation may be an operation that the user clicks the display screen, an operation that the user moves the electronic device, or an operation that the user gazes at the display screen. This is not specifically limited in this embodiment of this application.

In an example, the second operation may be the power switching operation in the foregoing step 501. In other words, the second operation may be triggered by the user, or may be automatically triggered by the electronic device. For example, when the first interface is displayed on the display screen, the user may press the power button, to trigger the second operation. In this way, the electronic device may receive the second operation. Alternatively, when the first interface is displayed on the display screen and the user does not control the electronic device for a long time, if duration since a time point at which the user controls the electronic device for the last time reaches preset duration, the electronic device automatically triggers the second operation.

Step 802: Present, in response to the interface switching operation, an interface transition effect corresponding to the interface switching operation.

It should be noted that, the interface transition effect includes at least one of a transition animation, a color gamut change effect, an interface transparency change effect, and a brightness change effect. It can be learned from the foregoing descriptions that the interface switching operation may be the first operation, or may be the second operation, and based on different interface switching operations, the interface transition effects presented by the electronic device are also different.

The interface transition effect includes at least one of the transition animation, the color gamut change effect, the interface transparency change effect, and the brightness change effect. In other words, in response to the interface switching operation, the electronic device presents at least one of a transition animation, a color gamut change effect, an interface transparency change effect, and a brightness change effect that correspond to the interface switching operation.

For example, when the second interface is an AOD interface and the interface switching operation is the second operation, referring to FIG. 9, the electronic device may present a first transition effect of switching from the first interface to the AOD interface. When the first transition effect includes a first transition animation, for the scenario, refer to the scenario shown in FIG. 1 or FIG. 2. When the second interface is the AOD interface and the interface switching operation is the first operation, referring to FIG. 10, the electronic device may present a second transition effect of switching from the AOD interface to the first interface. When the second transition effect includes a second transition animation, for the scenario, refer to the scenario shown in FIG. 3.

In some embodiments, the interface switching operation is the second operation, and the interface transition effect includes the interface transparency change effect. In this way, the operation that the electronic device presents, in response to the interface switching operation, the interface transition effect corresponding to the interface switching operation includes: obtaining, in response to the interface switching operation, ambient light data of an environment in which the electronic device is located; determining display transparency of an interface background in the second interface based on the ambient light data; and presenting the interface transition effect based on the display transparency, where transparency of the interface background in the second interface is the display transparency.

For example, when the second interface is the AOD interface, a background interface of the AOD interface is a lock screen wallpaper.

In an example, an operation that the electronic device presents the interface transition effect based on the display transparency includes: setting the transparency of the interface background in the second interface to the display transparency, and presenting the interface transition effect based on the set interface background. In other words, in the interface transition effect, the transparency of the interface background in the second interface included in at least one frame of transition effect is the display transparency.

In some embodiments, the electronic device obtains, in response to the interface switching operation, the ambient light data of the environment in which the electronic device is located. For the operation of determining the display transparency of the interface background in the second interface based on the ambient light data, refer to the foregoing operations in step 505 to step 509. Details are not described one by one in this embodiment of this application.

It should be noted that, when the second interface is the AOD interface, transparency of the lock screen wallpaper in the AOD interface may be the same as or different from transparency of the lock screen wallpaper in a lock screen interface, and generally, the transparency of the lock screen wallpaper in the AOD interface is greater than the transparency of the lock screen wallpaper in the lock screen interface.

It should be noted that, the display transparency is determined through current ambient light data, and the transparency of the interface background in the second interface is set to the display transparency. This not only ensures aesthetics of the second interface, but also enables information displayed in the second interface to be quickly obtained by the user and attention of the user is not attracted by the interface background.

In some embodiments, the electronic device may include an interface switching module and a PWM adjustment module, and the interface transition effect includes the transition animation. In this way, when the interface switching operation is the second operation, the operation that the electronic device presents, in response to the interface switching operation, the interface transition effect corresponding to the interface switching operation includes: The interface switching module presents, in response to the second operation, the first transition animation for switching from the first interface to the second interface.

In an example, for the operation that the interface switching module presents, in response to the second operation, the first transition animation for switching from the first interface to the second interface, refer to the foregoing operations in step 502 to step 511. Details are not described one by one in this embodiment of this application.

In some embodiments, when the interface switching operation is the first operation and the interface transition effect includes the transition animation, the operation that the electronic device presents, in response to the interface switching operation, the interface transition effect corresponding to the interface switching operation includes: The interface switching module presents, in response to the first operation, the second transition animation for switching from the second interface to the first interface.

In some embodiments, the interface transition effect may include not only the transition animation, but also another effect, for example, may further include the color gamut change effect. For example, in response to the interface switching operation, the electronic device presents the color gamut change effect based on a color gamut of the first interface and a color gamut of the second interface. When the color gamut of the first interface is higher than the color gamut of the second interface, a color gamut of the display screen is reduced. When the color gamut of the first interface is lower than the color gamut of the second interface, the color gamut of the display screen is improved. In other words, when the brightness of the first interface is greater than the brightness of the second interface, if the interface switching operation is the first operation, the electronic device may improve the color gamut of the display screen. If the interface switching operation is the second operation, the electronic device may reduce the color gamut of the display screen.

It can be learned from the foregoing descriptions that the electronic device includes the interface switching module and a color gamut adjustment module. In this way, when receiving a color gamut reducing instruction sent by the interface switching module, the color gamut adjustment module may reduce the color gamut of the display screen, where the color gamut reducing instruction is sent by the interface switching module when the interface switching module receives the second operation. When receiving a color gamut increasing instruction sent by the interface switching module, the color gamut adjustment module improves the color gamut of the display screen, where the color gamut increasing instruction is sent by the interface switching module when the interface switching module receives the first operation.

It should be noted that, different operations are performed on the color gamut of the display screen in different scenarios, so that color display on the display screen can be more adaptive to a displayed picture, and a display effect of the display screen can be improved.

Because the brightness of the first interface may be greater than or the same as the brightness of the second interface, based on the brightness of the first interface and the brightness of the second interface, the interface transition effects presented by the electronic device are also different.

In an example, when the brightness of the first interface is the same as the brightness of the second interface, the interface transition effect presented by the electronic device does not include the brightness change effect. When the brightness of the first interface is different from the brightness of the second interface, the transition effect presented by the electronic device includes the brightness change effect.

In some embodiments, the brightness of the first interface is greater than the brightness of the second interface, and the transition effect may further include the brightness change effect. In this way, if the interface switching operation is the first operation, brightness of the display screen is increased in response to the interface switching operation. If the interface switching operation is the second operation, the brightness of the display screen is reduced in response to the interface switching operation.

It should be noted that, the brightness of the display screen is reduced in an interface transition process, so that power consumption of the electronic device is reduced.

Step 803: Adjust a PWM frequency of the display screen in a process of presenting the interface transition effect.

It can be learned from the foregoing descriptions that the brightness of the first interface may be greater than or the same as the brightness of the second interface, based on the brightness of the first interface and the brightness of the second interface, operations that the electronic device adjusts the PWM frequency of the display screen in the process of presenting the interface transition effect are also different.

In some embodiments, the brightness of the first interface is the same as the brightness of the second interface. In this case, the operation that the electronic device adjusts the PWM frequency of the display screen in the process of presenting the interface transition effect includes: determining display content of the first interface and display content of the second interface, and increasing the PWM frequency when the display content of the second interface belongs to specified scenario content and the display content of the first interface does not belong to the specified scenario content. When the display content of the second interface does not belong to the specified scenario content and the display content of the first interface belongs to the specified scenario content, the PWM frequency is reduced. When both the display content of the second interface and the display content of the first interface do not belong to the specified scenario content, the PWM frequency is not adjusted. When both the display content of the second interface and the display content of the first interface belong to the specified scenario content, the PWM frequency is not adjusted either.

It should be noted that, the specified scenario content is content that requires the electronic device to enable an eye protection function. For example, the specified scenario content is a video, an article, or the like.

In some embodiments, the brightness of the first interface is greater than the brightness of the second interface. Based on this, when the interface switching operation is the first operation, the PWM frequency of the display screen is increased in the process of presenting the interface transition effect. When the interface switching operation is the second operation, the PWM frequency of the display screen is reduced in the process of presenting the interface transition effect.

It can be learned from the foregoing descriptions that the electronic device may include the interface switching module and the PWM adjustment module, and the interface transition effect includes the transition animation. Based on this, when the interface switching operation is the first operation, an operation that the electronic device increases the PWM frequency of the display screen in the process of presenting the interface transition effect includes: Referring to FIG. 10, the interface switching module sends a brightness increasing instruction to the PWM adjustment module in a process of presenting the second transition animation; and referring to FIG. 9, the PWM adjustment module increases the PWM frequency in response to the brightness increasing instruction.

It should be noted that, the interface switching module may send different brightness adjustment instructions to the PWM adjustment module based on different interface switching operations, thereby improving reliability and accuracy of adjusting the PWM frequency.

In some embodiments, when the interface switching operation is the first operation, the PWM frequency is increased from a first frequency to a second frequency in the process of presenting the interface transition effect, where the first frequency is less than the second frequency.

It should be noted that, the first frequency and the second frequency may be preset according to a requirement. For example, when the second interface is the AOD interface, the first frequency is a frequency at which PWM dimming is performed when the display screen is in an AOD mode, and the second frequency is a frequency at which the PWM dimming is performed when the display screen is in the screen-on state. For example, the second frequency may be 3840 Hz, and the first frequency may be 1440 Hz.

It should be noted that, the first frequency and the second frequency are set, so that the electronic device has data support when adjusting the PWM frequency, and the reliability and the accuracy of adjusting the PWM frequency are improved.

To implement switching of the PWM frequency, the electronic device may include at least two gamma curves, and each of the at least two gamma curves corresponds to one PWM frequency.

It should be noted that, a larger quantity of gamma curves included in the electronic device indicates a smoother process in which the PWM adjustment module adjusts the PWM frequency. For example, a gamma curve corresponding to another frequency is included between a gamma curve corresponding to the first frequency and a gamma curve corresponding to the second frequency. In this way, the PWM adjustment module may sequentially reduce the PWM frequency.

In some embodiments, after increasing the PWM frequency from the first frequency to the second frequency, the PWM adjustment module may send a dimming complete message to an AGP.

It should be noted that, different gamma curves are set, so that adjustment on the PWM frequency is more reliable and smoother.

In some embodiments, the second interface is the AOD interface. Based on this, when the electronic device increases the PWM frequency of the display screen and ends presentation of the second transition effect, the electronic device may display the lock screen interface and switch a state of the display screen from a DOZE state to an ON state.

It should be noted that, the electronic device may switch the state of the display screen from the DOZE state to the ON state after ending presentation of the second transition effect, or may switch the state of the display screen from the DOZE state to the ON state in a process of presenting the second transition effect. This is not specifically limited in this embodiment of this application.

It can be learned from the foregoing descriptions that the electronic device may include the interface switching module and the PWM adjustment module. Based on this, when the interface switching operation is the second operation, an operation that the electronic device reduces the PWM frequency of the display screen in the process of presenting the interface transition effect includes: The interface switching module sends a frequency reducing instruction to the PWM adjustment module in a process of presenting the first transition effect; and the PWM adjustment module reduces the PWM frequency in response to the frequency reducing instruction.

In an example, when the interface switching operation is the second operation, the electronic device reduces the PWM frequency from the second frequency to the first frequency in the process of presenting the interface transition effect.

In some embodiments, when the interface switching operation is the second operation, before reducing the PWM frequency of the display screen in the process of presenting the interface transition effect, the electronic device may further select, based on a type of the AOD mode, whether to reduce the PWM frequency, and determine a degree of adjusting the PWM frequency.

In an example, the electronic device may determine the type of the AOD mode. The type of the AOD mode includes a global display mode and a partial display mode. Based on this, when the interface switching operation is the second operation, the operation that the electronic device reduces the PWM frequency of the display screen in the process of presenting the interface transition effect includes: reducing, when the interface switching operation is the second operation and the type of the AOD mode is the global display mode, the PWM frequency of the display screen in the process of presenting the interface transition effect. When the type of the AOD mode is the partial display mode, the PWM frequency of the display screen is not reduced in the process of presenting the interface transition effect.

When the user sets the AOD mode, the user may set the type of the AOD mode to the global display mode, or may set the type of the AOD mode to the partial display mode. When the type of the AOD mode is the partial display mode, a clock view is displayed in the AOD interface, and the lock screen wallpaper is not displayed. In this case, brightness of the interface of the display screen is dark originally, which reduces the power consumption of the electronic device to some extent. Therefore, the PWM frequency may be adjusted or not adjusted. Generally, the PWM frequency may not be adjusted. However, when the type of the AOD mode is the global display mode, the lock screen wallpaper may be displayed with low brightness. In this case, to reduce the power consumption of the electronic device, the PWM frequency needs to be adjusted. Therefore, to determine whether to adjust the PWM frequency, before reducing the PWM frequency of the display screen in the process of presenting the interface transition effect, the electronic device may determine the type of the AOD mode.

In some embodiments, information related to settings of the electronic device may be stored in a set database. Therefore, the electronic device may query the set database, to determine the type of the AOD mode in the set database.

It should be noted that, the type of the AOD mode is determined, so that the PWM frequency is reduced more targetedly, and the reliability of adjusting the PWM frequency is improved.

In some embodiments, when the type of the AOD mode is the partial display mode, in the process of presenting the interface transition effect, the PWM frequency of the display screen may not be reduced, or the PWM frequency of the display screen may be reduced. When the PWM frequency of the display screen is reduced, the electronic device may reduce the PWM frequency from the second frequency to the first frequency, or reduce the PWM frequency from the second frequency to a third frequency, where the third frequency is less than the first frequency. This is not specifically limited in this embodiment of this application.

In some embodiments, when the second interface is the AOD interface, the electronic device may display the AOD interface and reduce a screen refresh rate of the display screen after ending presenting the interface transition effect. For example, when the electronic device displays the AOD interface, that is, when the electronic device is in a static display state, the screen refresh rate of the display screen may be reduced to 1 Hz.

It should be noted that, the screen refresh rate of the display screen is reduced, so that the power consumption of the electronic device is reduced.

In some embodiments, when the second interface is the AOD interface, in a process of presenting the first transition effect, the electronic device can not only reduce the PWM frequency, but also reduce a color gamut and the brightness of the display screen. The electronic device may further terminate a screen-on animation effect and a magazine wallpaper of the display screen, and lock a system. Then, the display screen is switched from the ON state to the DOZE state, and a non-full-screen AOD icon and a layer zooming animation effect are hidden.

It should be noted that, the electronic device may switch the state of the display screen from the ON state to the DOZE state after ending the presentation of the first transition effect, or may switch the state of the display screen from the ON state to the DOZE state in the process of presenting the first transition effect. This is not specifically limited in this embodiment of this application either.

In this embodiment of this application, when the brightness of the first interface is greater than the brightness of the second interface, in a process of switching an interface displayed on the display screen from the first interface to the second interface, the electronic device may present the first transition effect, and in the process of presenting the first transition effect, the electronic device may reduce the PWM frequency. In other words, because the PWM frequency is reduced when the second interface is displayed, the power consumption of the electronic device is reduced. In a process of switching the interface displayed on the display screen from the second interface to the first interface, the electronic device may present the second transition effect, and in the process of presenting the second transition effect, the PWM frequency may be increased. In this way, an objective of dynamically adjusting the PWM frequency based on different display content is achieved. In addition, because the PWM frequency can be increased, the eye protection function of the electronic device is also implemented. In addition, an occasion for adjusting the PWM frequency is in the process of presenting the interface transition effect. In this way, different effects of the interface transition effect in the presentation process may mask screen flicker on the display screen that is caused by adjustment on the PWM frequency, thereby improving the display effect of the screen.

The following describes the electronic device in the embodiments of this application.

In an example, the method is applicable to an electronic device having a display screen. By way of example but not limitation, the electronic device may be, but is not limited to, a tablet computer, a desktop computer, a laptop computer, a handheld computer, a notebook computer, a vehicle-mounted device, an ultra-mobile personal computer (ultra-mobile personal computer, UMPC), a netbook, a personal digital assistant (personal digital assistant, PDA), a mobile phone, a smart watch, a television, and the like. This is not limited in the embodiments of this application.

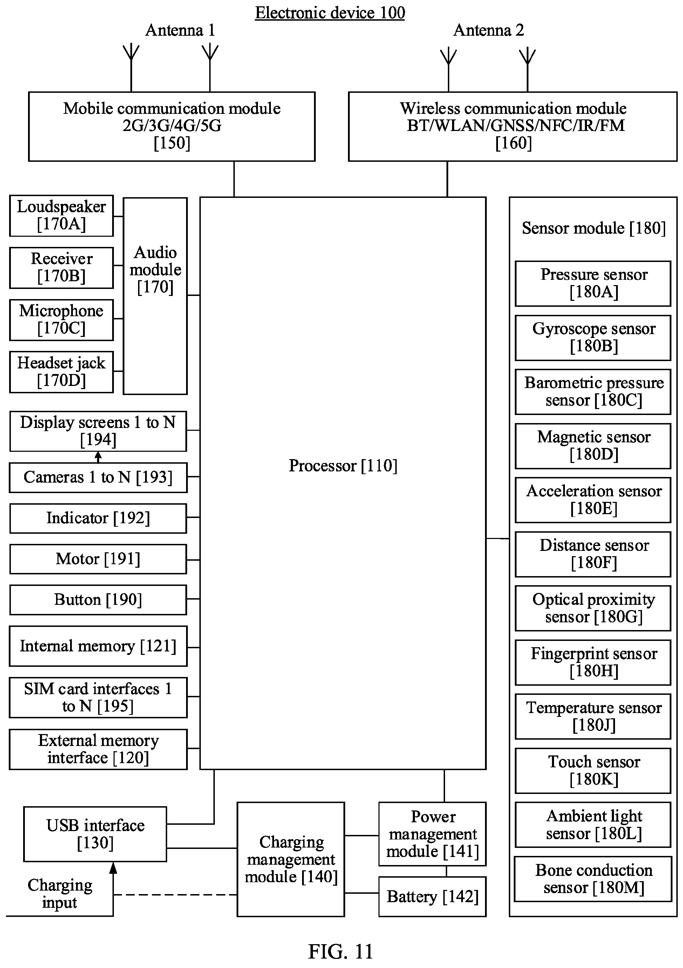

FIG. 11 is a schematic diagram of a structure of an electronic device according to an embodiment of this application. Referring to FIG. 11, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device. In some other embodiments of this application, the electronic device may include more or fewer components than those shown in the figure, or some components may be combined, or some components may be split, or a different component deployment may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and command center of the electronic device. The controller may generate an operation control signal based on an instruction operation code and a time sequence signal, to complete control of fetching and executing instructions.

A memory may be further configured in the processor 110, to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, and reduces waiting time of the processor 110, so that system efficiency is improved.

In some embodiments, the processor 110 may include one or more interfaces, for example, may include an inter-integrated circuit (inter-integrated circuit, 12C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The power management module 141 is configured to connect to the battery 142, the charging management module 140, and the processor 110. The power management module 141 receives input from the battery 142 and/or the charging management module 140, and supplies power to the processor 110, the internal memory 121, the external memory, the display screen 194, the camera 193, the wireless communication module 160, and the like. The power management module 141 may be further configured to monitor parameters such as a battery capacity, a quantity of battery cycles, and a battery health state (electric leakage and impedance). In some other embodiments, the power management module 141 may alternatively be arranged in the processor 110. In some other embodiments, the power management module 141 and the charging management module 140 may alternatively be arranged in a same device.

A wireless communication function of the electronic device may be implemented through the antenna 1, the antenna 2, the mobile communication module 150, the wireless communication module 160, the modem processor, the baseband processor, and the like.

The electronic device implements a display function through the GPU, the display screen 194, the application processor, and the like. The GPU is a microprocessor for image processing, and is connected to the display screen 194 and the application processor. The GPU is configured to perform mathematical and geometric calculations and render graphics. The processor 110 may include one or more GPUs that execute program instructions to generate or change display information.

The display screen 194 is configured to display an image, a video, or the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Miniled, a MicroLed, a Micro-oLed, a quantum dot light-emitting diode (quantum dot light-emitting diode, QLED), or the like. In some embodiments, the electronic device may include 1 or N display screens 194, where N is an integer greater than 1.

In some embodiments, when the display panel is the OLED, at least one driver circuit is coupled to a light-emitting diode array. The at least one driver circuit is configured to generate an adaptive pulse width modulation (PWM) signal to control at least one of a plurality of subarrays of the light-emitting diode. The adaptive PWM signal may be dynamically adjusted.

The external memory interface 120 may be configured to connect to an external storage card such as a Micro SD card, to expand a storage capability of the electronic device. The external storage card communicates with the processor 110 through the external memory interface 120, to implement a data storage function. For example, a file such as music or a video is stored in the external storage card.

The internal memory 121 may be configured to store computer-executable program code, and the computer-executable program code includes instructions. The processor 110 runs the instructions stored in the internal memory 121, to perform various function applications and data processing of the electronic device. The internal memory 121 may include a program storage area and a data storage area. The program storage area may store an operating system, an application required by at least one function (for example, a sound playback function and an image display function), and the like. The data storage area may store data (for example, audio data and a phone book) and the like created when the electronic device is used. In addition, the internal memory 121 may include a high-speed random access memory, and may further include a non-volatile memory, for example, at least one magnetic disk storage device, a flash memory device, or a universal flash storage (universal flash storage, UFS).

The electronic device may implement an audio function, for example, music playback or sound recording, through the audio module 170, the loudspeaker 170A, the receiver 170B, the microphone 170C, the headset jack 170D, the application processor, and the like.

The pressure sensor 180A is configured to sense a pressure signal, and may convert the pressure signal into an electrical signal. In some embodiments, the pressure sensor 180A may be arranged on the display screen 194. There are a plurality of types of pressure sensors 180A, such as a resistive pressure sensor, an inductive pressure sensor, and a capacitive pressure sensor. The capacitive pressure sensor may include at least two parallel plates having conductive materials. When force is exerted on the pressure sensor 180A, capacitance between electrodes changes. The electronic device determines strength of the pressure based on a change of the capacitance. When a touch operation is performed on the display screen 194, the electronic device detects strength of the touch operation based on the pressure sensor 180A. The electronic device may also calculate a touch position based on a detection signal of the pressure sensor 180A. In some embodiments, touch operations that are performed at a same touch position but have different touch operation strength may correspond to different operation instructions. For example, when a touch operation whose touch operation strength is less than a pressure threshold is performed on a short message application icon, an instruction of checking a short message is executed. When a touch operation whose touch operation strength is greater than or equal to the pressure threshold is performed on the short message application icon, an instruction of creating a new short message is executed.

The gyroscope sensor 180B may be configured to determine a motion posture of the electronic device. In some embodiments, an angular velocity of the electronic device around three axes (namely, an x axis, a y axis, and a z axis) may be determined through the gyroscope sensor 180B. The gyroscope sensor 180B may be configured for image stabilization during photographing. For example, when a shutter is pressed, the gyroscope sensor 180B measures an angle at which the electronic device jitters, and calculates, based on the angle, a distance for which a lens module needs to compensate, and allows the lens to cancel the jitter of the electronic device through reverse motion, thereby implementing image stabilization. The gyroscope sensor 180B may be further used in navigation and a motion sensing game scene.

The optical proximity sensor 180G may include a light-emitting diode (LED) and an optical detector, for example, a photodiode. The light-emitting diode may be an infrared light-emitting diode. The electronic device emits infrared light outwards by using the light-emitting diode. The electronic device detects infrared reflected light from a nearby object by using the photodiode. When sufficient reflected light is detected, the electronic device may determine that there is an object near the electronic device. When insufficient reflected light is detected, it may be determined that there is no object near the electronic device. The electronic device may detect, by using the optical proximity sensor 180G, that a user holds the electronic device close to an ear for a call, so that a screen is automatically turned off to save power. The optical proximity sensor 180G may also be configured to automatically unlock and lock the screen in a leather case mode or a pocket mode.

The ambient light sensor 180L is configured to perceive ambient light brightness. The electronic device may adaptively adjust brightness of the display screen 194 according to the perceived ambient light brightness. The ambient light sensor 180L may also be configured to automatically adjust white balance during photographing. The ambient light sensor 180L may further cooperate with the optical proximity sensor 180G to detect whether the electronic device is in a pocket, so as to prevent an accidental touch.

The touch sensor 180K is alternatively referred to as a "touch panel". The touch sensor 180K may be arranged on the display screen 194. The touch sensor 180K and the display screen 194 form a touchscreen, which is alternatively referred to as a "touch screen". The touch sensor 180K is configured to detect a touch operation performed on or near the touch sensor 180K. The touch sensor 180K may transmit the detected touch operation to the application processor, to determine a touch event type. A visual output related to the touch operation may be provided through the display screen 194. In some other embodiments, the touch sensor 180K may alternatively be arranged on a surface of the electronic device, and is located at a position different from that of the display screen 194.

The button 190 includes a power button, a volume button, and the like. The button 190 may be a mechanical button, or a touch button. The electronic device may receive button input, and generate button signal input related to user setting and function control of the electronic device.

All or some of the foregoing embodiments may be implemented through software, hardware, firmware, or any combination thereof. When software is used to implement the embodiments, all or some of embodiments may be implemented in a form of a computer program product. The computer program product includes one or more computer instructions. When the computer instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium that can be accessed by the computer, or a data storage device such as a server or a data center in which one or more usable media are integrated. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid-state disk (Solid-State Disk, SSD)), or the like.

The foregoing descriptions are optional embodiments provided in this application, but are not intended to limit this application. Any modification, equivalent replacement, improvement, or the like made within the technical scope disclosed in this application shall fall within the protection scope of this application.

## Claims

1. A PWM frequency adjustment method, applied to an electronic device having a display screen, wherein the method comprises:
receiving an interface switching operation, wherein the interface switching operation is an operation of triggering the electronic device to switch between a first interface and a second interface;
presenting, in response to the interface switching operation, an interface transition effect corresponding to the interface switching operation; and
adjusting a PWM frequency of the display screen in a process of presenting the interface transition effect.

2. The method according to claim 1, wherein the interface transition effect comprises at least one of a transition animation, a color gamut change effect, an interface transparency change effect, and a brightness change effect.

3. The method according to claim 1 or 2, wherein brightness of the first interface is greater than brightness of the second interface; and
the adjusting a PWM frequency of the display screen in a process of presenting the interface transition effect comprises:
increasing, when the interface switching operation is a first operation, the PWM frequency of the display screen in the process of presenting the interface transition effect, wherein the first operation is an operation of triggering the electronic device to switch from the second interface to the first interface; and
reducing, when the interface switching operation is a second operation, the PWM frequency of the display screen in the process of presenting the interface transition effect, wherein the second operation is an operation of triggering the electronic device to switch from the first interface to the second interface.

4. The method according to claim 3, wherein the interface switching operation is the second operation; the electronic device comprises an interface switching module and a PWM adjustment module, and the interface transition effect comprises the transition animation; and
the presenting, in response to the interface switching operation, an interface transition effect corresponding to the interface switching operation comprises:
presenting, by the interface switching module and in response to the second operation, a first transition animation for switching from the first interface to the second interface; and
the reducing, when the interface switching operation is a second operation, the PWM frequency of the display screen in the process of presenting the interface transition effect comprises:
sending, by the interface switching module, a frequency reducing instruction to the PWM adjustment module in a process of presenting the first transition animation; and
reducing, by the PWM adjustment module, the PWM frequency in response to the frequency reducing instruction.

5. The method according to claim 3 or 4, wherein the interface switching operation is the second operation, and the interface transition effect further comprises the interface transparency change effect; and
the presenting, in response to the interface switching operation, an interface transition effect corresponding to the interface switching operation comprises:
obtaining, in response to the interface switching operation, ambient light data of an environment in which the electronic device is located;
determining display transparency of an interface background in the second interface based on the ambient light data;
setting transparency of the interface background in the second interface to the display transparency; and
presenting the interface transition effect based on the set interface background.

6. The method according to any one of claims 3 to 5, wherein the interface transition effect further comprises the color gamut change effect; and
the presenting, in response to the interface switching operation, an interface transition effect corresponding to the interface switching operation comprises:
improving a color gamut of the display screen in response to the interface switching operation if the interface switching operation is the first operation; and
reducing the color gamut of the display screen in response to the interface switching operation if the interface switching operation is the second operation.

7. The method according to any one of claims 3 to 6, wherein the interface transition effect further comprises the brightness change effect; and
the presenting, in response to the interface switching operation, an interface transition effect corresponding to the interface switching operation comprises:
improving brightness of the display screen in response to the interface switching operation if the interface switching operation is the first operation; and
reducing the brightness of the display screen in response to the interface switching operation if the interface switching operation is the second operation.

8. The method according to any one of claims 1 to 4, wherein the electronic device comprises at least two gamma curves, and each of the at least two gamma curves corresponds to one PWM frequency.

9. The method according to claim 3, wherein the increasing, when the interface switching operation is a first operation, the PWM frequency of the display screen in the process of presenting the interface transition effect comprises:
increasing, when the interface switching operation is the first operation, the PWM frequency from a first frequency to a second frequency in the process of presenting the interface transition effect, wherein the first frequency is less than the second frequency; and
the reducing, when the interface switching operation is a second operation, the PWM frequency of the display screen in the process of presenting the interface transition effect comprises:
reducing, when the interface switching operation is the second operation, the PWM frequency from the second frequency to the first frequency in the process of presenting the interface transition effect.

10. An electronic device, wherein a structure of the electronic device comprises a processor and a memory; and
the memory is configured to store a program that supports the electronic device in performing the method according to any one of claims 1 to 9.

11. A computer-readable storage medium, wherein the computer-readable storage medium stores instructions, and when the instructions are run on a computer, the computer is enabled to perform the method according to any one of claims 1 to 9.
